# EUROPEAN PATENT APPLICATION

(11) **EP 2 554 806 A1**
(43) Date of publication of application: **06.02.2013**
(21) Application number: 11762535.0
(22) Date of filing: 10.03.2011
(51) Int. Cl.: F01K 9/00, B60H 1/32, F01K 23/06, F01K 23/10, F01N 5/02, F02G 5/00, F02G 5/02

(54) **WASTE HEAT REGENERATION SYSTEM**

(30) Priority: 29.03.2010 JP 2010075167
(71) Applicant: Kabushiki Kaisha Toyota Jidoshokki, Kariya-shi, Aichi 448-8671 (JP)
(72) Inventor: ENOKIJIMA, Fuminobu, Kariya-shi Aichi 448-8671 (JP); IGUCHI, Masao, Kariya-shi Aichi 448-8671 (JP); MORI, Hidefumi, Kariya-shi Aichi 448-8671 (JP)
(74) Representative: TBK
(86) International application number: PCT/JP2011/055652
(87) International publication number: WO 2011/122295

(57) **Abstract**

A waste heat regeneration system includes a pump, a coolant boiler, an exhaust gas boiler, an expander, a condenser, a gas-liquid separator and a supercooler. A flow control valve maintains a temperature difference (T1 - T2) at a predetermined value or less by adjusting the amount of an operating fluid which flows in a bypass flow path through the control of an opening degree based on a pressure difference (P1 - P2) corresponding to the temperature difference (T1 - T2) between the temperature (T1) of the operating fluid on the upstream side of the supercooler and the temperature (T2) of the operating fluid on the downstream side thereof. Accordingly, the degree of supercooling is prevented from becoming excessive and the waste heat regeneration efficiency of a Rankine cycle device can be maintained.

## Description

### TECHNICAL FIELD

The present invention relates to a waste heat regeneration system, and particularly, to a waste heat regeneration system that uses a Rankine cycle device.

### BACKGROUND ART

A waste heat regeneration system which uses a Rankine cycle device recovering mechanical energy (power) from waste heat of a vehicle engine has been developed. A typical Rankine cycle device includes a pump which pressure-feeds an operating fluid, a heat exchanger which heats the operating fluid through the heat exchange with the waste heat of an engine, an expander which recovers mechanical energy by expanding the heated operating fluid, and a condenser which cools and condenses the expanded operating fluid, and these components are sequentially and circularly connected to each other so as to form a closed circuit.

In the waste heat regeneration system mounted on a vehicle, external air of the vehicle is used as a cooling medium for the condenser in many cases. When an abrupt change in the temperature occurs in the external air as the cooling medium, the liquid operating fluid which comes out of the condenser and is suctioned to the pump is boiling, and which may cause cavitation in the pump. When cavitation is generated, the pump does not operate, so the operation of the Rankine cycle is stopped. For this reason, in order to prevent the generation of cavitation in the pump, the operating fluid which is cooled and condensed by the condenser is further cooled so as to become a supercooled (subcooled) state and is suctioned to the pump.

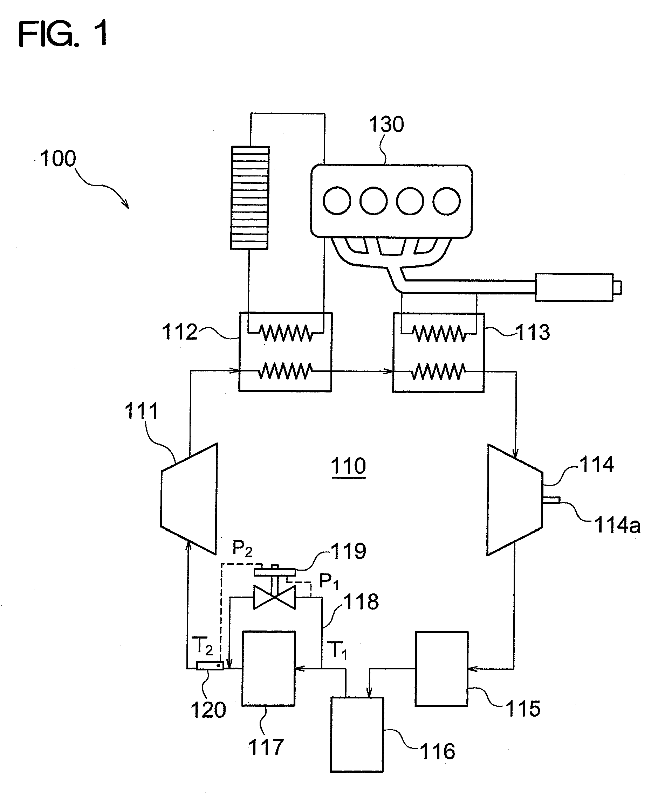

Patent Literature 1 discloses power generating equipment in which a supercooler is installed between a condenser and a liquid feeding pump. Referring to FIG. 1 of Patent Literature 1, in the power generating equipment, the cooling medium used in the supercooler 16 is used in the condenser 14, whereby the temperature of the cooling medium of the condenser 14 is constantly maintained so as to be higher than the temperature of the cooling medium of the supercooler 16. As a result, a difference in the temperature constantly occurs between the operating fluid on the upstream side of the supercooler 16 and the operating fluid on the downstream side thereof, and the operating fluid which comes out of the supercooler 16 and is suctioned to the liquid feeding pump 15 is supercooled.

### CITATION LIST

### PATENT LITERATURE

Patent Literature 1: Japanese Patent Application Laid-Open No. 2004-339965

### DISCLOSURE OF INVENTION

### PROBLEM TO BE SOLVED BY THE INVENTION

However, in the power generating equipment disclosed in Patent Literature 1, the operating fluid which is suctioned to the liquid feeding pump 15 may be supercooled, but the degree of supercooling ensured at that time may not be controlled. For this reason, the degree of supercooling may increase too much depending on the temperature of the cooling medium. When the degree of supercooling of the operating fluid increases too much, the amount of heat necessary for heating the operating fluid in the heat exchanger increases, so that the waste heat regeneration efficiency of the Rankine cycle device is degraded.

The present invention is made to address these problems, and is aimed at providing a waste heat regeneration system capable of preventing the degree of supercooling from becoming excessive and maintaining waste heat regeneration efficiency.

### MEANS FOR SOLVING PROBLEM

In order to address the above-described problems, there is provided a waste heat regeneration system with a Rankine cycle device in which an operating fluid is pressure-fed by a pump, the pressure-fed operating fluid is heated by a heat exchanger with heat of an engine, the heated operating fluid is expanded by an expander so as to recover mechanical energy, and the expanded operating fluid is condensed by a condenser, the waste heat regeneration system including: a supercooler which is installed on the downstream side of the condenser and the upstream side of the pump and which supercools the operating fluid; a bypass flow path which bypasses at least a part of the supercooler; an opening and closing valve which adjusts the amount of the operating fluid flowing in the bypass flow path; and a control unit which controls the opening degree of the opening and closing valve, in which the control unit controls the opening degree of the opening and closing valve such that the amount of the operating fluid flowing in the bypass flow path increases as the temperature difference between the temperature of the operating fluid on the upstream side of the supercooler and the temperature of the operating fluid on the downstream side of the supercooler increases.

### EFFECT OF THE INVENTION

According to the waste heat regeneration system of the present invention, it is possible to prevent the degree of supercooling from becoming excessive.

### BRIEF DESCRIPTION OF DRAWING

FIG. 1 is a diagram illustrating a configuration of a waste heat regeneration system according to an embodiment of the present invention.

### BEST MODE(S) FOR CARRYING OUT THE INVENTION

Hereafter, an embodiment of the present invention will be described by referring to the accompanying drawing.

### Embodiment

A configuration of a waste heat regeneration system 100 according to the embodiment of the present invention is illustrated in FIG. 1.
The waste heat regeneration system 100 includes a pump 111, a coolant boiler 112, an exhaust gas boiler 113, an expander 114, a condenser 115, a gas-liquid separator 116, and a supercooler 117, and these components are sequentially and circularly connected to each other so as to form a closed circuit 110.

The pump 111 pressure-feeds an operating fluid into the closed circuit 110. The coolant boiler 112 is a first heat exchanger, and heats the operating fluid through the heat exchange with the coolant of an engine 130. The exhaust gas boiler 113 is a second heat exchanger, and heats the operating fluid through the heat exchange with exhaust gas discharged from the engine 130. The expander 114 recovers mechanical energy (power) by expanding the operating fluid which was heated and evaporated in the coolant boiler 112 and the exhaust gas boiler 113. The condenser 115 cools and condenses the expanded operating fluid through the heat exchange with external air. The pump 111, the coolant boiler 112, the exhaust gas boiler 113, the expander 114, and the condenser 115 become main components in a general Rankine cycle device. Further, waste heat of the engine 130 is a heating medium for the coolant boiler 112 and the exhaust gas boiler 113 while external air is a cooling medium for the condenser 115.

The gas-liquid separator 116 is used to separate the operating fluid in a gas-liquid mixture state into gas and liquid, and the operating fluid which comes out of the gas-liquid separator 116 becomes a saturated liquid state. The supercooler 117 puts the operating fluid in a supercooled (subcooled) state by further cooling (supercooling) the operating fluid in a saturated liquid state through the heat exchange with external air.

Further, an inlet of a bypass flow path 118 which allows the upstream side and the downstream side of the supercooler 117 to communicate with each other is connected to the downstream side of the gas-liquid separator 116 and the upstream side of the supercooler 117, and an outlet of the bypass flow path 118 is connected to the downstream side of the supercooler 117 and the upstream side of the pump 111. The bypass flow path 118 bypasses the entire supercooler 117, and has a pressure loss and a heat exchange rate sufficiently smaller than those of the supercooler 117. Also, a flow control valve 119 serving as an opening and closing valve which adjusts the amount of the operating fluid flowing in the bypass flow path 118 is installed the bypass flow path.

The flow control valve 119 is an existing diaphragm-type flow control valve which includes a mechanism (control unit) controlling the opening degree of the flow control valve. When two reference pressures are applied to the upper and lower sides of the diaphragm installed inside a valve body, the diaphragm moves up and down due to such a pressure difference, and hence the opening degree of the valve changes. In this embodiment, the pressure P1 on the upstream side of the supercooler 117 and the pressure P2 acquired from a temperature-sensitive cylinder 120 attached to the pipe on the downstream side of the supercooler 117 are applied as the reference pressures.

Since the operating fluid which comes out of the gas-liquid separator 116 is in a saturated liquid state, a one-to-one relation is established between the temperature and the pressure thereof. For this reason, the temperature T1 of the operating fluid on the upstream side of the supercooler 117 may be obtained from the pressure P1 on the upstream side of the supercooler 117.
Further, since it is considered that the temperatures at respective positions of the pipe inside the closed circuit 110 are approximately equal to the temperature of the operating fluid which flows in that position, the temperature T2 of the operating fluid on the downstream side of the supercooler 117 may be obtained from the pressure P2 acquired from the temperature-sensitive cylinder 120. That is, the pressure P1 correlates with the temperature T1, and the pressure P2 correlates with the temperature T2. Various fluids may be used as the fluid inside the temperature-sensitive cylinder 120. In this embodiment, the fluid inside the temperature-sensitive cylinder 120 is the same as the fluid used in the Rankine cycle device.

The flow control valve 119 adjusts the amount of the operating fluid which flows in the bypass flow path 118 based on the pressure difference P1 - P2 between the pressure P1 corresponding to the temperature T1 of the operating fluid on the upstream side of the supercooler 117 and the pressure P2 corresponding to the temperature T2 of the operating fluid on the downstream side of the supercooler 117. Specifically, when the pressure difference P1 - P2 is larger than a predetermined pressure difference ΔP, the opening degree of the flow control valve 119 is increased so that the amount of the operating fluid flowing in the bypass flow path 118 increases. On the other hand, when the pressure difference P1 - P2 is smaller than the predetermined pressure difference ΔP, the flow control valve 119 is fully closed so that the amount of the operating fluid flowing in the bypass flow path 118 becomes zero. Here, the predetermined pressure difference ΔP is set so as to correspond to a predetermined degree of supercooling which is necessary for preventing the generation of cavitation in the pump 111 while maintaining the waste heat regeneration efficiency of the Rankine cycle device. The predetermined degree of supercooling, i.e. the predetermined value of the temperature difference T1 - T2 on the upstream side and the downstream side of the supercooler 117 is set to 10°C, and the amount of the operating fluid flowing in the bypass flow path 118 is adjusted so that the temperature difference T1 - T2 is maintained at 10°C or less.

Next, the operation of the waste heat regeneration system 100 according to this embodiment will be described.
When the operation of the Rankine cycle device of the waste heat regeneration system 100 starts, the pump 111 is driven by a driving source (not illustrated), and the operating fluid is pressure-fed toward the downstream side of the pump 111. While the operating fluid which is pressure-fed from the pump 111 flows in the coolant boiler 112 and the exhaust gas boiler 113, the operating fluid turns into a high-temperature gas by absorbing heat from the coolant of the engine 130 and the exhaust gas discharged from the engine 130, and expands in the expander 114 so as to generate mechanical energy, thereby rotationally driving a driving shaft 114a of the expander 114. An electrical generator (not illustrated) is connected to the driving shaft 114a, and hence the mechanical energy is converted into electrical power.

While the operating fluid which comes out of the expander 114 flows in the condenser 115, the operating fluid is cooled and condensed through the heat exchange with external air, and is separated into gas and liquid in the gas-liquid separator 116. The operating fluid in a saturated liquid state which comes out of the gas-liquid separator 116 branches into the supercooler 117 and the bypass flow path 118 according to a ratio which is determined by the opening degree of the flow control valve 119. The operating fluid which flows in the supercooler 117 is further cooled (supercooled) through the heat exchange with external air. On the other hand, since the heat exchange rate of the bypass flow path 118 is small, the operating fluid which flows in the bypass flow path 118 loses substantially little heat. The operating fluids which flow in the two paths join at the outlet of the bypass flow path 118. Then, the operating fluid is suctioned into the pump 111 and is pressure-fed toward the coolant boiler 112.

At this time, as described above, when the temperature difference T1 - T2 of the operating fluid is larger than a predetermined degree of supercooling and the relation of P1 - P2 > ΔP is established, the flow control valve 119 increases its opening degree so that the amount of the operating fluid which flows in the bypass flow path 118 increases. As a result, the amount of the operating fluid which flows in the supercooler 117 so as to be supercooled decreases, so that the temperature T2 increases and the temperature difference T1 - T2 decreases.
On the other hand, when the degree of supercooling, i.e. the temperature difference T1 - T2 is smaller than a predetermined degree and the relation of P1 - P2 < ΔP is established, the flow control valve 119 is fully closed so that the amount of the operating fluid which flows in the bypass flow path 118 becomes zero. As a result, the amount of the operating fluid which flows in the supercooler 117 so as to be supercooled increases, so that the temperature T2 decreases and the temperature difference T1 - T2 increases.
Accordingly, since the temperature of the external air as the cooling medium of the condenser 115 changes, even when the temperature T1 of the operating fluid on the upstream side of the supercooler 117 and the temperature T2 of the operating fluid on the downstream side of the supercooler 117 change, the temperature difference T1 - T2 is constantly maintained at a predetermined degree of supercooling or less. In other words, the operating fluid which comes out of the supercooler 117 and is suctioned to the pump 111 constantly has a predetermined degree of supercooling or less.

As described above, in the waste heat regeneration system 100 according to this embodiment, the flow control valve 119 maintains the temperature difference T1 - T2 at a predetermined value or less by adjusting the amount of the operating fluid which flows in the bypass flow path 118 through the control of the opening degree based on the pressure difference P1 - P2 corresponding to the temperature difference T1 - T2 between the temperature T1 of the operating fluid on the upstream side of the supercooler 117 and the temperature T2 of the operating fluid on the downstream side of the supercooler 117. Accordingly, it is possible to prevent the degree of supercooling from becoming excessive and maintain the waste heat regeneration efficiency of the Rankine cycle device.

Further, since the amount of the operating fluid is adjusted based on the pressure difference P1 - P2 corresponding to the temperature difference T1 - T2 of the operating fluid by using the diaphragm-type flow control valve 119, there is no need to prepare a temperature sensor or a microcomputer controlling the opening degree of the valve, and the configuration of the waste heat regeneration system is simplified.
Further, since the pressure from the downstream side of the expander 114 to the upstream side of the pump 111 is constant, the pressure at an arbitrary position between the downstream side of the expander 114 and the upstream side of the pump 111 may be used instead of the pressure P1 on the upstream side of the supercooler 117. That is, since the temperature T1 of the operating fluid may be obtained based on the pressure at an arbitrary position from the downstream side of the expander 114 to the upstream side of the pump 111, greater flexibility of the temperature detection position is offered.
Furthermore, since the pipe 118 and the flow control valve 119 are only added to the existing Rankine cycle device with the supercooler, it is possible to save space and reduce cost.

### Other embodiments

In order to acquire a value correlated with the temperature T1 of the operating fluid on the upstream side of the supercooler 117 and a value correlated with the temperature T2 of the operating fluid on the downstream side thereof, various methods may be used. For example, the temperatures T1 and T2 of the operating fluid may be detected by inserting a temperature sensor into a pipe. Further, since it is considered that the temperature of the surface of the pipe is approximately equal to the temperature of the operating fluid flowing therein, the temperature may be detected by attaching a temperature sensor to the surface of the pipe.

Further, the bypass flow path 118 may be installed the supercooler 117.

## Claims

1. A waste heat regeneration system with a Rankine cycle device in which an operating fluid is pressure-fed by a pump, the pressure-fed operating fluid is heated by a heat exchanger with waste heat of an engine, the heated operating fluid is expanded by an expander so as to recover mechanical energy, and the expanded operating fluid is condensed by a condenser, the waste heat regeneration system comprising:
a supercooler which is installed on the downstream side of the condenser and the upstream side of the pump and supercools the operating fluid;
a bypass flow path which bypasses at least a part of the supercooler;
an opening and closing valve which adjusts the amount of the operating fluid flowing in the bypass flow path; and
a control unit which controls the opening degree of the opening and closing valve,
wherein the control unit controls the opening degree of the opening and closing valve such that the amount of the operating fluid flowing in the bypass flow path increases as the temperature difference between the temperature of the operating fluid on the upstream side of the supercooler and the temperature of the operating fluid on the downstream side of the supercooler increases.

2. The waste heat regeneration system according to claim 1, wherein the control unit maintains the temperature difference between the upstream side and the downstream side of the supercooler at a predetermined value or less by adjusting the amount of the operating fluid flowing in the bypass flow path through the control of the opening degree of the opening and closing valve based on a value correlated with the temperature of the operating fluid on the upstream side of the supercooler and a value correlated with the temperature of the operating fluid on the downstream side of the supercooler.

3. The waste heat regeneration system according to claim 2, wherein a gas-liquid separator which separates the operating fluid into gas and liquid is installed on the downstream side of the condenser and the upstream side of the supercooler, and
wherein the value correlated with the temperature of the operating fluid on the upstream side of the supercooler is the pressure on the upstream side of the pump and the downstream side of the expander.

4. The waste heat regeneration system according to any one of claims 1 to 3, wherein the opening and closing valve is installed the bypass flow path.
